# EUROPEAN PATENT SPECIFICATION

(11) **EP 2 947 824 B1**
(45) Date of publication and mention of the grant of the patent: **12.07.2017**
(21) Application number: 14169729.2
(22) Date of filing: 23.05.2014
(51) Int. Cl.: H04L 12/46

(54) **Method for providing virtual private network (VPN) functionality to a customer edge (CE) device using a service provider (SP) network, service provider network for providing virtual private network (VPN) functionality to a customer edge (CE) device, program and computer program product**
Verfahren zur Bereitstellung einer Funktionalität eines virtuellen privaten Netzwerk (VPN) an eine Customer-Edge-Vorrichtung (CE) mithilfe eines Dienstanbieternetzwerks (SP), Dienstanbieternetzwerk zur Bereitstellung einer Funktionalität eines virtuellen privaten Netzwerks (VPN) an eine Customer-Edge-Vorrichtung (CE), Programm und Computerprogrammprodukt
Procédé pour fournir une fonctionnalité de réseau privé virtuel (VPN) à un dispositif de frontière client (CE) au moyen d'un réseau fournisseur de services (SP), ledit réseau pour fournir une telle fonctionnalité au dispositif client en question, programme et produit de programme informatique

(43) Date of publication of application: 25.11.2015
(73) Proprietor: Deutsche Telekom AG, 53113 Bonn (DE)
(72) Inventor: Schatzmayr, Rainer, 53229 Bonn (DE)
(74) Representative: Schwöbel, Thilo K.

(56) References cited:
- US-A1- 2009 252 061
- US-A1- 2012 250 686
- US-B1- 8 339 973
- US-B1- 8 644 188

## Description

### BACKGROUND

The present invention relates to a method for providing virtual private network (VPN) functionality to a customer edge (CE) device using a service provider (SP) network.

The present invention further relates to a service provider network for providing virtual private network (VPN) functionality to a customer edge (CE) device.

Additionally, the present invention relates to a program and a computer program product.

Internet protocol (IP) virtual private network (VPN) technology is used by service providers to provide IP based VPN functionality to a customer's network, wherein the customer's network may include multiple remote sites which are connected via the service provider (SP) network. The customer may connect a device (customer edge - CE) to a provider provisioned VPN by accessing an edge router (provider edge - PE) of the service provider. The IP-VPN isolates the traffic related to different customers such that dedicated IP addresses are used for the network communication within a single VPN. Typically, IP-VPN is implemented by installing IP-VPN software on the edge routers. Moreover, some service providers use virtualization of the IP-VPN functionality of the edge router, wherein a virtual provider edge router implements the IP-VPN functionality. In this scenario, all traffic belonging to a specific IP-VPN is tunnelled to the corresponding virtual router.

A problem with existing technologies is that virtual provider edge routers have a relatively low availability with respect to physical provider edge routers; this can be seen for example in the disclosure of document US 8 644 188 B1. This could result in a relatively low level of Service Level Agreement (SLA) being provided to the customer.

An object of the present invention is to provide virtual private network functionality to a customer edge device using a service provider network such that a relatively high level of Service Level Agreement is delivered to a customer, even though a virtual provider edge router is used to provide virtual private network functionality to the customer edge device.

The object of the present invention is achieved by a method for providing virtual private network (VPN) functionality to a customer edge (CE) device using a service provider (SP) network, wherein the service provider (SP) network comprises a provider edge (PE) device, a first virtual provider edge (vPE) appliance and a second virtual provider edge (vPE) appliance, wherein the customer edge (CE) device is physically connected to the provider edge (PE) device of the service provider (SP) network, wherein a first part of a virtual private network (VPN) comprises the customer edge (CE) device, wherein a second part of the virtual private network (VPN) is remotely accessible by the customer edge (CE) device via at least one of the first virtual provider edge (vPE) appliance and the second virtual provider edge (vPE) appliance, wherein the method comprises the steps of:
-- receiving, by the provider edge (PE) device, an Internet protocol (IP) data packet from the customer edge (CE) device, wherein the Internet protocol (IP) data packet encapsulates virtual private network (VPN) data being related to the virtual private network (VPN),
-- transmitting, using Internet protocol (IP) anycast, the Internet protocol (IP) data packet from the provider edge (PE) device to the first virtual provider edge (vPE) appliance or to the second virtual provider edge (vPE) appliance.

According to the present invention it is thereby advantageously possible to provide virtual private network functionality to a customer edge device, via a service provider network, such that the customer edge device has remote access to the second part of the virtual private network. This is advantageously realized according to the present invention, even though a virtual provider edge router is used to provide the virtual private network functionality to the customer edge device. By means of using Internet protocol anycast for an Internet protocol communication between the provider edge device - on the one hand - and the first and second virtual provider edge appliances - on the other hand - it is thereby advantageously possible to increase the availability of the first and second virtual provider edge devices with respect to the state of the art. This advantageously allows to deliver a relatively high level of Service Level Agreement (SLA) to a customer associated with the customer edge device. Preferably, the use of Internet protocol anycast advantageously allows the realization of optimized load balancing of virtual private network traffic across the service provider network, preferably by transmitting the Internet protocol data packet from the provider edge device to only one virtual provider edge appliance at a time. In particular, the network traffic load is advantageously reduced as compared to other configurations of the customer edge device in which the customer edge device connects to multiple provider edge routers (virtual or physical) by means of using distinct Internet Protocol addresses for each of the multiple provider edge devices. For example, configuration efforts related to the operating software and/or the hardware of the customer edge device are advantageously avoided.

According to a preferred embodiment of the present invention, the virtual private network data is a virtual private network Internet protocol data packet (VPN-IP data packet) related to the virtual private network. Preferably, the VPN-IP data packet is transmitted from the customer edge device (CE) to the provider edge device (PE), wherein the VPN-IP data packet is encapsulated, by the provider edge device (PE), in the Internet protocol data packet upon reception of the VPN-IP data packet at the provider edge device (PE). The Internet protocol data packet (which encapsulates the VPN-IP data packet is sent to an anycast address related to the first (and second) virtual provider edge appliance. The (first or second) virtual provider edge appliance (which receives the Internet protocol data packet) de-encapsulates the Internet Protocol data packet upon reception of the Internet protocol data packet from the provider edge (PE) device and processes it. Packets that should be sent to a CE (11) are encapsulated by the virtual PE router and sent to the PE (10) router with the address of the customer interface at the PE (10) router. According to the present invention, the provider edge (PE) device is configured such that other Internet protocol data packets (each of which encapsulating another IP-VPN data packet related to the VPN) is de-encapsulated upon reception from a virtual provider edge appliance, wherein the other VPN-IP data packet is transmitted to the customer edge (CE) device of the VPN.

Thereby, it is advantageously possible to use, in a relatively simple manner, a virtual provider edge appliance (router) anycast address per customer and/or virtual private network - wherein, for example, one or more virtual provider edge appliances are installed per data center. It is thereby furthermore advantageously possible to reduce the maintenance efforts, especially the time needed to change the router software.

Within the context of the present invention, a service provider network is an Internet protocol based telecommunications network. For example, the service provider network may include a part of a larger telecommunications network, for example the Internet, and/or an overlay network. The service provider network includes one or more provider edge devices. A provider edge device is preferably a provider edge router (layer-3 device according to the Open Systems Interconnection Modell - OSI Model), the provider edge device being preferably configured to forward Internet protocol data packets received from one site (for example the customer edge device) to another site (for example the first or second virtual provider edge appliance) based on an Internet protocol address of the Internet protocol data packet, and optionally based on other information in the Internet protocol header of the Internet protocol data packet. A provider edge device is preferably to be understood as a device at the edge of the service provider network with the functionality that is needed to interface with the customer edge device being connected to the provider edge device by means of a physical (for example wired or wireless) connection. In particular, a customer edge device is a device with the functionality needed on the customer premises to access the virtual private network services provided by the service provider network. Preferably, the customer edge device is a router in the customer network (comprising the first part of the virtual private network), which interfaces the service provider network (for example via the physical connection to the provider edge device). Preferably, the customer edge device is configured to encapsulate virtual private network data into an Internet protocol data packet and/or extract virtual private network data from an Internet protocol data packet.

Within the context of the present invention, a virtual provider edge appliance is a hardware appliance, software appliance, or a combination of both. In particular, a virtual provider edge appliance is a virtual router, for example a software and/or hardware based emulation of a physical router. According to the present invention, the first and second virtual provider edge appliances are preferably deployed in distinct or separate data centers of the service provider network. Preferably, a virtual provider edge appliance is configured to serve more than one Internet protocol virtual private network.

Within the context of the present invention, a virtual private network is preferably a layer-3 (according to the OSI-Model) virtual private network connecting sets of hosts and routers based on layer-3 network addresses. In particular, the virtual private network is used to interconnect customer edge devices (or customer devices in a network part associated with the customer edge devices) using the service provider network, wherein the first and second virtual provider edge appliance are preferably configured to isolate a customer edge device of a virtual private network from another customer edge device of a (separate) further virtual private network. Preferably, providing virtual private network functionality using the service provider network means that the customer edge device is enabled to remotely communicate with the second part of the virtual private network by means of using at least one Internet protocol based virtual private network tunnel through the service provider network.

According to a preferred embodiment of the present invention, the method comprises the further steps of:
-- exchanging control data between the first and second virtual provider edge (vPE) appliances, the control data being related to the virtual private network (VPN),
-- synchronizing the first and second virtual provider edge (vPE) appliances depending on the control data.

According to the present invention it is thereby advantageously possible to exchange the control data between the first and second virtual provider edge appliances by means of using redundant virtual provider edge appliances for virtual private network traffic. In particular, the first virtual provider edge appliance is thereby enabled to replace the second virtual provider edge appliance, and vice versa. Thus, it is thereby advantageously possible to increase the availability of the virtual private network services to the customer edge device, especially in case of changes of the virtual provider network infrastructure. Preferably, the use of Internet protocol anycast and the exchange of control data between the virtual provider edge appliances allows for a more efficient usage of the service provider network because the Internet protocol data packet is transmitted to only one virtual provider edge appliance - in particular by using only one virtual private network tunnel between the customer edge device and the corresponding virtual provider edge appliance. Furthermore, the transport of the virtual private network data across the virtual private network (i.e.to the remotely located second part of the virtual private network) is enhanced with respect to the state of the art. In particular, it is advantageously possible to detect a failure related to the first virtual provider edge appliance within a relatively short time interval (in particular within sub-seconds), preferably a time interval of less than 5 seconds, more preferably less than 2 second, even more preferably less than 1 second. Preferably, the first and second virtual provider edge appliance are configured to exchange control data (in particular routing information) related to the IP-VPN (signalling) and subsequently exchange the data related to the IP-VPN (user plane).

According to a further preferred embodiment of the present invention, the first virtual provider edge (vPE) appliance comprises a first routing table, wherein the second virtual provider edge (vPE) appliance comprises a second routing table, the first and second routing tables being related to the virtual private network (VPN), wherein the method comprises the further step of:
-- updating the first and/or second routing table depending on control data being exchanged between the first and second virtual provider edge (vPE) appliances.

According to the present invention it is thereby advantageously possible to use the first virtual provider edge appliance and the second virtual provider edge appliance redundantly such that the virtual private network functionality is provided to the customer edge device with increased availability with respect to the state of the art.

According to a further preferred embodiment of the present invention, the method comprises the further step of:
-- transmitting the Internet protocol (IP) data packet from the provider edge (PE) device to the first or second virtual provider edge (vPE) appliance depending on
   -- routing data stored in the provider edge (PE) device, and/or
   -- a failure detection step being carried out, by the provider edge (PE) device, prior to transmitting the Internet protocol (IP) data packet.

According to the present invention it is thereby advantageously possible to route the Internet protocol data package along an optimal network route (according to a routing metric) from the provider edge device to one of the first or second virtual provider edge appliance, in case that both, the first and second virtual provider edge appliance, are reachable by the customer edge device via the service provider network (i.e. no failure exists with respect to the first and second virtual provider edge appliance). Furthermore, it is thereby advantageously possible to detect a failure related to the first virtual provider edge appliance and then route the Internet protocol data packet along a second network route to the second virtual provider edge appliance. It is thereby furthermore advantageously possible to reduce maintenance efforts with regard to a reconfiguration of the customer edge device - especially in case that a failure occurs - such that service outages taking several minutes or even hours are substantially avoided. Preferably, the IP-VPN is reconfigured after the detection of the failure, preferably within a relatively short time interval of less than 1 second, more preferably less than 100 millisecond, even more preferably less than 50 millisecond. This allows the service provider to deliver IP-VPN services with high level of Service Level Agreements.

According to a further preferred embodiment of the present invention, the provider edge (PE) device comprises a set of routing metric values such that each routing metric value of the set of routing metric values is related to a network route from the provider edge (PE) device to a specific virtual provider edge (vPE) appliance, wherein the method comprises the further step of:
-- transmitting the Internet protocol (IP) data packet from the provider edge (PE) device to the first virtual provider edge (vPE) appliance, in case that the first virtual provider edge (vPE) appliance is related to a lowest routing metric value of the set of routing metric values.

According to the present invention it is thereby advantageously possible to transmit virtual private network data by means of using an optimal network route via the service provider network such that the service provider is enabled to deliver Internet protocol virtual provider network services with a relatively high level of Service Level Agreements. In particular, the routing metrics are used to steer the Internet protocol traffic to the closest virtual provider edge router.

According to a further preferred embodiment of the present invention, the method comprises the further step of:
-- assigning to the first and second virtual provider edge (vPE) appliance, by the service provider (SP) network, the same Internet protocol (IP) anycast address, wherein the Internet protocol (IP) anycast address is used by the first and second virtual provider edge (vPE) appliance for Internet protocol (IP) communication related to the virtual private network (VPN).

According to the present invention it is thereby advantageously possible to use the same Internet protocol anycast address for the Internet protocol data packets comprising the virtual private network data such that the Internet protocol data packet is transmitted along only one route to the first or second virtual provider edge appliance. Preferably, Internet Protocol anycast address is used by the customer edge device to communicate with the first and second virtual provider edge appliance.

According to a further preferred embodiment of the present invention, wherein the method comprises the further steps of:
-- carrying out the failure detection step prior to transmitting the Internet protocol (IP) data packet,
-- detecting, in the failure detection step, a failure, the failure being related to at least one of:
   -- a connection between the provider edge (PE) device and a virtual provider edge (vPE) appliance, and
   -- an operating state of a virtual provider edge (vPE) appliance.

According to the present invention it is thereby advantageously possible to increase the availability of virtual private network functionality provided to the customer edge device because the failure is detected within a relatively short time interval, preferably of less than 1 second, more preferably less than 100 millisecond, even more preferably less than 50 millisecond. It is thereby advantageously possible to enable a relatively fast reconfiguration of the virtual private network, especially by means of exchanging control data between the first and second virtual private network appliances such that the first and second virtual private network appliances are both usable for the same virtual private network traffic.

According to a further preferred embodiment of the present invention, the method comprises the further step of:
-- routing the Internet protocol (IP) data packet from the provider edge (PE) device to the second virtual provider edge (vPE) appliance, in case that the failure, being detected in the failure detection step, is related to at least one of:
   -- a network connection between the provider edge (PE) device and the first virtual provider edge (vPE) appliance, and
   -- an operating state of the first virtual provider edge (vPE) appliance.

According to the present invention it is thereby advantageously possible to transmit virtual private network data by means of using a functioning network route via the service provider network such that the availability is increased with respect to the state of the art, even though virtual provider edge appliances are used. Thereby, the service provider is enabled to deliver Internet protocol virtual provider network services with a relatively high level of Service Level Agreements.

According to a further preferred embodiment of the present invention, initially, the second part of the virtual private network (VPN) is remotely accessible by the customer edge (CE) device via the first virtual provider edge (vPE) appliance and the second virtual provider edge (vPE) appliance, wherein the method comprises the further steps of:
-- transmitting, using Internet protocol (IP) anycast, the Internet protocol (IP) data packet from the provider edge (PE) device to the first virtual provider edge (vPE) appliance,
-- carrying out a further failure detection step subsequent to transmitting the Internet protocol (IP) data packet,
-- receiving, by the provider edge (PE) device, a further Internet protocol (IP) data packet from the customer edge (CE) device, wherein the further Internet protocol (IP) data packet encapsulates further virtual private network (VPN) data being related to the virtual private network (VPN),
-- routing the further Internet protocol (IP) data packet from the provider edge (PE) device to the second virtual provider edge (vPE) appliance, in case that a further failure, being detected in the further failure detection step, is related to at least one of:
   -- a network connection between the provider edge (PE) device and the first virtual provider edge (vPE) appliance, and
   -- an operating state of the first virtual provider edge (vPE) appliance.

According to the present invention it is thereby advantageously possible to provide the virtual private network functionality to the customer edge device such that the first virtual provider edge appliance (for example having the lowest routing metric) is used as long as it is available and the second virtual provider edge appliance (for example having a higher routing metric) is used if the first virtual provider edge appliance becomes unavailable.

According to a further preferred embodiment of the present invention, the service provider (SP) network comprises a further provider edge (PE) device, wherein further routing data is stored in the further provider edge (PE) device, wherein the method comprises the further step of:
-- configuring, by the service provider (SP) network, the routing data of the provider edge (PE) device and the further routing data of the further provider edge (PE) device such
   -- that the routing data indicate that a first routing metric value related to the first virtual provider edge (vPE) appliance is lower than a second routing metric value related to the second virtual provider edge (vPE) appliance, and
   -- that the further routing data indicate that a further first routing metric value related to the first virtual provider edge (vPE) appliance is lower than a further second routing metric value related to the second virtual provider edge (vPE) appliance.

According to the present invention it is thereby advantageously possible to optimize a network wide load distribution (with respect to the service provider network) such that the service provider is enabled to deliver Internet protocol virtual provider network services with a relatively high level of Service Level Agreements.

The present invention also relates to a service provider (SP) network for providing virtual private network (VPN) functionality to a customer edge (CE) device, wherein the service provider (SP) network comprises a provider edge (PE) device, a first virtual provider edge (vPE) appliance and a second virtual provider edge (vPE) appliance, wherein the customer edge (CE) device is physically connected to the provider edge (PE) device of the service provider (SP) network, wherein a first part of a virtual private network (VPN) comprises the customer edge (CE) device, wherein a second part of the virtual private network (VPN) is remotely accessible by the customer edge (CE) device via at least one of the first virtual provider edge (vPE) appliance and the second virtual provider edge (vPE) appliance, wherein the provider edge (PE) device is configured to receive an Internet protocol (IP) data packet from the customer edge (CE) device, wherein the Internet protocol (IP) data packet encapsulates virtual private network (VPN) data being related to the virtual private network (VPN), wherein the provider edge (PE) device is configured to transmit, using Internet protocol (IP) anycast, the Internet protocol (IP) data packet to the first virtual provider edge (vPE) appliance or to the second virtual provider edge (vPE) appliance.

According to the present invention it is thereby advantageously possible to provide, by the service provider network, virtual private network functionality to the customer edge device such that the customer edge device has remote access to the second part of the virtual private network, even though a virtual provider edge router is used to provide the virtual private network functionality to the customer edge device. Furthermore, it is thereby advantageously possible to increase the availability of the first and second virtual provider edge devices, especially with respect to the state of the art, because Internet protocol anycast is used for an Internet protocol communication between the provider edge device and the first and second virtual provider edge appliances. Accordingly, a relatively high level of Service Level Agreement (SLA) is delivered to a customer associated with the customer edge device. It is thereby furthermore advantageously possible to realize a service provider network having relatively simple network resources for the Internet protocol communication between the customer edge device and the virtual provider edge appliances.

According to a preferred embodiment - in particular of the service provider network - of the present invention, the service provider (SP) network comprises a first data center and a second data center, wherein the first virtual provider edge (vPE) appliance is located in the first data center, wherein the second virtual provider edge (vPE) appliance is located in the second data center.

According to the present invention it is thereby advantageously possible to enable the service provider network to provide virtual private network functionality to the customer edge device such that an optimal network wide load distribution is realized, especially by deploying the virtual provider edge appliances in distinct data centers.

According to a further preferred embodiment - in particular of the service provider network - of the present invention, the provider edge device is configured to transmit the Internet protocol (IP) data packet to the first or second virtual provider edge (vPE) appliance depending on
-- routing data stored in the provider edge (PE) device, and/or
-- a failure detection step carried out by the provider edge (PE) device.

According to the present invention it is thereby advantageously possible to configure the service provider network such that the Internet protocol data package is routed along an optimal network route from the provider edge device to one of the first and second virtual provider edge appliance. Furthermore, it is thereby advantageously possible to detect a failure related to the first virtual provider edge appliance and route the Internet protocol data packet along a second network route to the second virtual provider edge appliance.

Furthermore, the present invention relates to a program comprising a computer readable program code which, when executed on a computer or on a provider edge (PE) device or a virtual provider edge (vPE) appliance, or in part on the provider edge (PE) device and in part on the virtual provider edge (vPE) appliance, causes the computer or the provider edge (PE) device or the virtual provider edge (vPE) appliance to perform a method according to the present invention.

Furthermore, the present invention relates to a computer program product for using a provider edge device with a virtual provider edge (vPE) appliance, the computer program product comprising a computer program stored on a storage medium, the computer program comprising program code which, when executed on a computer or on a provider edge (PE) device or a virtual provider edge (vPE) appliance, or in part on the provider edge (PE) device and in part on the virtual provider edge (vPE) appliance, causes the computer or the provider edge (PE) device or the virtual provider edge (vPE) appliance to perform a method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

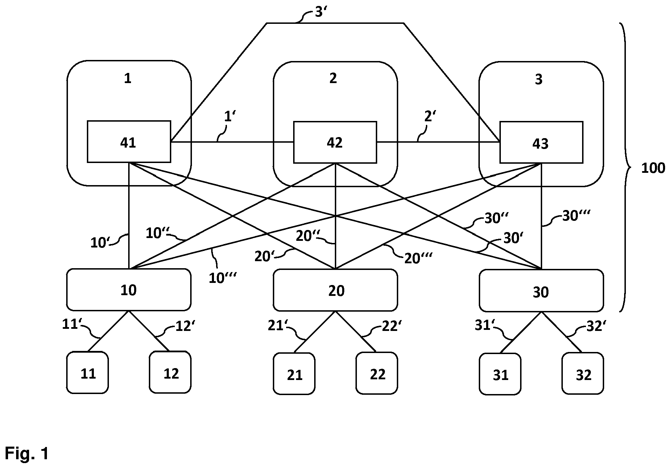

Figures 1 schematically illustrates a service provider network according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a service provider network 100 according to the present invention is illustrated schematically. The service provider network 100 is adapted to provide virtual private network functionality to at least one customer edge device 11, 12, 21, 22, 31, 32 - wherein the at least one customer edge device 11, 12, 21, 22, 31, 32 is preferably at least one customer edge router. For example, a virtual private network comprises a first customer edge device 11, a second customer edge device 21, and a third customer edge device 31 and/or a further virtual private network comprises a further first customer edge device 12, a further second customer edge device 22, and a further third customer edge device 32. The virtual private network includes here a first part, a second part and a third part, wherein the first, second and third parts are remotely located with respect to each other. Here, the first part comprises the first customer edge device 11, wherein the second part comprises the second customer edge device 21, and wherein the third part comprises the third customer edge device 31. In particular, the further virtual private network accordingly includes a further first part, a further second part and a further third part, wherein the further first part comprises the further first customer edge device 12, wherein the further second part comprises the further second customer edge device 22, and wherein the further third part comprises the further third customer edge device 33.

The service provider network 100 comprises at least one provider edge device 10, 20, 30 for providing access of the at least one customer edge device 11, 12, 21, 22, 31, 32 to the service provider network 100. According to the embodiment illustrated in Figure 1, the at least one provider edge device 10, 20, 30 include a first provider edge device 10, a second provider edge device 20 and a third provider edge device 30. Here, the first provider edge device 10 is physically connected to the first and further first customer edge device 11, 12, the second provider edge device 20 is physically connected to the second and further second customer edge device 21, 22, and the third provider edge device 30 is physically connected to the third and further third customer edge device 31, 32. Each of the at least one customer edge device 11, 12, 21, 22, 31, 32 is preferably connected to one of the at least one provider edge device 10, 20, 30 via one of the network links 11', 12', 21', 22', 31', 32'.

The service provider network 100 further comprises at least two virtual provider edge appliances of a first virtual provider edge appliance 41, a second virtual provider edge appliance 42, and a third virtual provider edge appliance 43. The second and third part of the virtual private network are remotely accessible, by the first customer edge device 11, via at least one of the first, second and third virtual provider edge appliance 41, 42, 43. Preferably, the first provider edge device 10 communicates with the first virtual provider edge appliance 41 via a first network route 10', with the second virtual provider edge appliance 42 via a second network route 10", and with the third virtual provider edge appliance 43 via a third network route 10"'. In the same way, the second provider edge device 20 communicates here with the first, second and third virtual provider edge appliance 41, 42, 43 via network routes 20', 20", 20"', and the third provider edge device 30 communicates here with the first, second and third virtual provider edge appliance 41, 42, 43 via network routes 30', 30", 30"'.

According to a preferred embodiment of the present invention, the first virtual provider edge appliance 41 is installed in a first data center 1, wherein the second virtual provider edge appliance 42 is installed in a second data center 2, and the third virtual provider edge appliance 43 is installed in a third data center 3. Preferably, the first, second and third data centers are separate data centers, more preferably geographically separated data centers. Preferably, each of the first, second and third virtual provider edge appliances is a virtual router having a data base containing the VPN routing information of the Internet Protocol addresses of each IP-VPN - here the virtual private network and the further virtual private network - as in physical IP-VPN provider edge routers.

According to a preferred embodiment of the present invention, the first, second and third virtual provider edge appliance 41, 42, 43 are interconnected and adapted to - preferably constantly - exchange control data between each other. In particular, by means of exchanging the control data, it is advantageously possible to update the VPN routing information (in particular routing tables stored in the respective data base) related to the IP-VPN. For example, in cases of changes in the IP-VPN infrastructure and/or in cases of failures of specific links or connections, the exchange of the control data ensures that the routing information of all virtual provider edge routers 41, 42, 43 (serving the virtual private network and/or the further virtual private network) is identical. In Figure 1, the network links 1', 2', 3' are illustrated, which are used to exchange the control data (comprising routing information for updates). By exchanging the control data, all virtual provider edge routers (here at least the first, second and third virtual provider edge appliance 41, 42, 43 - are informed that the first, second and third customer edge device 11,21,31 build one IP-VPN (the virtual private network), and that the further first, further second and further third customer edge device 12, 22, 32 build another IP-VPN (the further virtual private network). According to the present invention, the first, second and/or third virtual provider edge appliance 41, 42, 43 share the information about tunnel end-points on the first, second and/or third provider edge device 10, 20, 30. According to a preferred embodiment of the present invention, the first, second and third virtual provider edge appliance 41, 42, 43 make use of IP anycast addresses (one for the virtual private network and another one for the further virtual private network) as the address where the at least one provider edge device 10, 20, 30 sends the virtual private network data and/or the further virtual private network data from each IP-VPN to. In particular, the IP anycast addresses have the same IP address on multiple points in the service provider network 100. In the example shown in Figure 1, each virtual provider edge appliance 41, 42, 43 has two IP anycast addresses - one for each IP-VPN. In particular, as the virtual provider edge appliances 41, 42, 43 have the same IP address for each IP-VPN, each provider edge device 10, 20, 30 will "see" multiple endpoints and will send the traffic to one of them.

In a normal functioning mode (of the service provider network 100), the first provider edge device 10 (or the second provider edge device 20, or the third provider edge device 30) transmits an Internet Protocol data packet (which is here also called an IP-VPN packet) to its "closest" virtual provider edge appliance - for example the first virtual provider edge appliance 41. The "closest" virtual provider edge appliance 41 is defined by that specific virtual provider edge appliance that has a lowest routing metric associated with the respective network routes - for example the first network route 10' between the first provider edge device 10 and the first virtual provider edge appliance 41. The "closest" virtual provider edge appliance 41 subsequently forwards the Internet Protocol data packet to the second and/or third provider edge device 20, 30 that is connected to a target address of the IP-VPN packet.

In case of a failure of a virtual provider edge router, or a failure in the link or network connection between at least one provider edge device 10, 20, 30 - for example the first provider edge device 10 - and at least one virtual provider edge appliance 41, 42, 43 - for example the first virtual provider edge appliance 41 - the service provider network - here the first provider edge device 10 - detects the failure (in particular a link-loss failure). Depending on the detection of the failure, the at least one provider edge device 10, 20, 30 - here the first provider edge device 10 - selects a next virtual provider edge appliance - here one of the second or third virtual provider edge appliance 42, 43 - according to entries of its routing table. It is thereby advantageously possible to realized a relatively efficient re-routing of the VPN-IP traffic, preferably within a time interval of less than 1 second, more preferably less than 100 milliseconds, even more preferably less than 50 milliseconds.

## Claims

1. Method for providing virtual private network (VPN) functionality to a customer edge (CE) device (11) using a service provider (SP) network (100), wherein the service provider (SP) network (100) comprises a provider edge (PE) device (10), a first virtual provider edge (vPE) appliance (41) and a second virtual provider edge (vPE) appliance (42), wherein the customer edge (CE) device (11) is physically connected to the provider edge (PE) device (10) of the service provider (SP) network (100), wherein a first part of a virtual private network (VPN) comprises the customer edge (CE) device (11), wherein a second part of the virtual private network (VPN) is remotely accessible by the customer edge (CE) device (11) via at least one of the first virtual provider edge (vPE) appliance (41) and the second virtual provider edge (vPE) appliance (42), wherein the method comprises the steps of:
-- receiving, by the provider edge (PE) device (10), an Internet protocol (IP) data packet from the customer edge (CE) device (11), wherein the Internet protocol (IP) data packet encapsulates virtual private network (VPN) data being related to the virtual private network (VPN),
-- transmitting, using Internet protocol (IP) anycast, the Internet protocol (IP) data packet from the provider edge (PE) device (10) to the first virtual provider edge (vPE) appliance (41) or to the second virtual provider edge (vPE) appliance (42).

2. Method according to claim 1, wherein the method comprises the further steps of:
-- exchanging control data between the first and second virtual provider edge (vPE) appliances (41, 42), the control data being related to the virtual private network (VPN),
-- synchronizing the first and second virtual provider edge (vPE) appliances (41, 42) depending on the control data.

3. Method according to one of the preceding claims, wherein the first virtual provider edge (vPE) appliance (41) comprises a first routing table, wherein the second virtual provider edge (vPE) appliance (42) comprises a second routing table, the first and second routing tables being related to the virtual private network (VPN), wherein the method comprises the further step of:
-- updating the first and/or second routing table depending on control data being exchanged between the first and second virtual provider edge (vPE) appliances (41, 42).

4. Method according to one of the preceding claims, wherein the method comprises the further step of:
-- transmitting the Internet protocol (IP) data packet from the provider edge (PE) device (10) to the first or second virtual provider edge (vPE) appliance (41, 42) depending on
-- routing data stored in the provider edge (PE) device (10), and/or
-- a failure detection step being carried out, by the provider edge (PE) device (10), prior to transmitting the Internet protocol (IP) data packet.

5. Method according to one of the preceding claims, wherein the provider edge (PE) device (10) comprises a set of routing metric values such that each routing metric value of the set of routing metric values is related to a network route (10', 10", 10"') from the provider edge (PE) device (10) to a specific virtual provider edge (vPE) appliance (41, 42, 43), wherein the method comprises the further step of:
-- transmitting the Internet protocol (IP) data packet from the provider edge (PE) device (10) to the first virtual provider edge (vPE) appliance (41), in case that the first virtual provider edge (vPE) appliance (41) is related to a lowest routing metric value of the set of routing metric values.

6. Method according to one of the preceding claims, wherein the method comprises the further step of:
-- assigning to the first and second virtual provider edge (vPE) appliance (41, 42), by the service provider (SP) network (100), the same Internet protocol (IP) anycast address, wherein the Internet protocol (IP) anycast address is used by the first and second virtual provider edge (vPE) appliance (41, 42) for Internet protocol (IP) communication related to the virtual private network (VPN).

7. Method according to one of the preceding claims, wherein the method comprises the further steps of:
-- carrying out the failure detection step prior to transmitting the Internet protocol (IP) data packet,
-- detecting, in the failure detection step, a failure, the failure being related to at least one of:
-- a connection between the provider edge (PE) device (10) and a virtual provider edge (vPE) appliance (41, 42, 43), and
-- an operating state of a virtual provider edge (vPE) appliance (41, 42, 43).

8. Method according to one of the preceding claims, wherein the method comprises the further step of:
-- routing the Internet protocol (IP) data packet from the provider edge (PE) device (10) to the second virtual provider edge (vPE) appliance (42), in case that the failure, being detected in the failure detection step, is related to at least one of:
-- a network connection between the provider edge (PE) device (10) and the first virtual provider edge (vPE) appliance (41), and
-- an operating state of the first virtual provider edge (vPE) appliance (41).

9. Method according to one of the preceding claims, wherein, initially, the second part of the virtual private network (VPN) is remotely accessible by the customer edge (CE) device (11) via the first virtual provider edge (vPE) appliance (41) and the second virtual provider edge (vPE) appliance (42), wherein the method comprises the further steps of:
-- transmitting, using Internet protocol (IP) anycast, the Internet protocol (IP) data packet from the provider edge (PE) device (10) to the first virtual provider edge (vPE) appliance (41),
-- carrying out a further failure detection step subsequent to transmitting the Internet protocol (IP) data packet,
-- receiving, by the provider edge (PE) device (10), a further Internet protocol (IP) data packet from the customer edge (CE) device (11), wherein the further Internet protocol (IP) data packet encapsulates further virtual private network (VPN) data being related to the virtual private network (VPN),
-- routing the further Internet protocol (IP) data packet from the provider edge (PE) device (10) to the second virtual provider edge (vPE) appliance (42), in case that a further failure, being detected in the further failure detection step, is related to at least one of:
-- a network connection between the provider edge (PE) device (10) and the first virtual provider edge (vPE) appliance (41), and
-- an operating state of the first virtual provider edge (vPE) appliance (41).

10. Method according to one of the preceding claims, wherein the service provider (SP) network (100) comprises a further provider edge (PE) device (20), wherein further routing data is stored in the further provider edge (PE) device (20), wherein the method comprises the further step of:
-- configuring, by the service provider (SP) network (100), the routing data of the provider edge (PE) device (10) and the further routing data of the further provider edge (PE) device (20) such
-- that the routing data indicate that a first routing metric value related to the first virtual provider edge (vPE) appliance (41) is lower than a second routing metric value related to the second virtual provider edge (vPE) appliance (42), and
-- that the further routing data indicate that a further first routing metric value related to the first virtual provider edge (vPE) appliance (41) is lower than a further second routing metric value related to the second virtual provider edge (vPE) appliance (42).

11. Service provider (SP) network (100) for providing virtual private network (VPN) functionality to a customer edge (CE) device (11), wherein the service provider (SP) network (100) comprises a provider edge (PE) device (10), a first virtual provider edge (vPE) appliance (41) and a second virtual provider edge (vPE) appliance (42), wherein the customer edge (CE) device (11) is physically connected to the provider edge (PE) device (10) of the service provider (SP) network (100), wherein a first part of a virtual private network (VPN) comprises the customer edge (CE) device (11), wherein a second part of the virtual private network (VPN) is remotely accessible by the customer edge (CE) device (11) via at least one of the first virtual provider edge (vPE) appliance (41) and the second virtual provider edge (vPE) appliance (42), wherein the provider edge (PE) device (10) is configured to receive an Internet protocol (IP) data packet from the customer edge (CE) device (11), wherein the Internet protocol (IP) data packet encapsulates virtual private network (VPN) data being related to the virtual private network (VPN), wherein the provider edge (PE) device (10) is configured to transmit, using Internet protocol (IP) anycast, the Internet protocol (IP) data packet to the first virtual provider edge (vPE) appliance (41) or to the second virtual provider edge (vPE) appliance (42).

12. Service provider (SP) network (100) according to claim 11, wherein the service provider (SP) network (100) comprises a first data center (1) and a second data center (2), wherein the first virtual provider edge (vPE) appliance (41) is located in the first data center (1), wherein the second virtual provider edge (vPE) appliance (42) is located in the second data center (2).

13. Service provider (SP) network (100) according to one of claims 11 or 12, wherein the provider edge device (10) is configured to transmit the Internet protocol (IP) data packet to the first or second virtual provider edge (vPE) appliance (41, 42) depending on
-- routing data stored in the provider edge (PE) device (10), and/or
-- a failure detection step carried out by the provider edge (PE) device (10).

14. Computer program comprising program code means which, when executed on a computer or on a provider edge (PE) device (10) or on a virtual provider edge (vPE) appliance (41, 42), causes the computer or the provider edge (PE) device (10) or the virtual provider edge (vPE) appliance (41, 42) to perform all steps of the method of any of claims 1 to 10.

15. Storage device adapted to store the computer program of claim 14.

## Patentansprüche

1. Verfahren zum Bereitstellen von virtueller privater Netz-(VPN-) Funktionalität für eine Customer Edge- (CE-) Vorrichtung (11) unter Verwendung eines Diensteanbieter-(SP-) Netzes (100), wobei das Diensteanbieter- (SP-) Netz (100) eine Provider Edge- (PE-) Vorrichtung (10), ein erstes virtuelles Provider Edge- (vPE-) Gerät (41) und ein zweites virtuelles Provider Edge- (vPE-) Gerät (42) umfasst, wobei die Customer Edge- (CE-) Vorrichtung (11) physisch mit der Provider Edge- (PE-) Vorrichtung (10) des Diensteanbieter- (SP-) Netzes (100) verbunden ist, wobei ein erster Teil eines virtuellen privaten Netzes (VPN) die Customer Edge- (CE-) Vorrichtung (11) umfasst, wobei ein zweiter Teil des virtuellen privaten Netzes (VPN) durch die Customer Edge- (CE-) Vorrichtung (11) über wenigstens eines vom ersten virtuellen Provider Edge- (vPE-) Gerät (41) und vom zweiten virtuellen Provider Edge- (vPE-) Gerät (42) von fern erreichbar ist, wobei das Verfahren folgende Schritte umfasst:
- durch die Provider Edge- (PE-) Vorrichtung (10) ein Internetprotokoll- (IP-) Datenpaket von der Customer Edge- (CE-) Vorrichtung (11) zu empfangen, wobei das Internetprotokoll- (IP-) Datenpaket virtuelle private Netz- (VPN-) Daten kapselt, die in Beziehung zum virtuellen privaten Netz (VPN) stehen,
- unter Verwendung von Internetprotokoll- (IP-) Anycast das Internetprotokoll- (IP-) Datenpaket von der Provider Edge- (PE-) Vorrichtung (10) zum ersten virtuellen Provider Edge- (vPE-) Gerät (41) oder zum zweiten virtuellen Provider Edge- (vPE-) Gerät (42) zu übertragen.

2. Verfahren nach Anspruch 1, wobei das Verfahren die folgenden weiteren Schritte umfasst:
- Steuerdaten zwischen dem ersten und dem zweiten virtuellen Provider Edge- (vPE-) Gerät (41, 42) auszutauschen, wobei die Steuerdaten zum virtuellen privaten Netz (VPN) in Beziehung stehen,
- das erste und das zweite virtuelle Provider Edge-(vPE-) Gerät (41, 42) abhängig von den Steuerdaten zu synchronisieren.

3. Verfahren nach einem der vorhergehenden Ansprüche, wobei das erste virtuelle Provider Edge- (vPE-) Gerät (41) eine erste Routing-Tabelle umfasst, wobei das zweite virtuelle Provider Edge- (vPE-) Gerät (42) eine zweite Routing-Tabelle umfasst, wobei die erste und die zweite Routing-Tabelle zum virtuellen privaten Netz (VPN) in Beziehung stehen, wobei das Verfahren den weiteren folgenden Schritt umfasst:
- die erste und/oder die zweite Routing-Tabelle abhängig von Steuerdaten zu aktualisieren, die zwischen dem ersten und dem zweiten virtuellen Provider Edge (vPE-) Gerät (41, 42) ausgetauscht werden.

4. Verfahren nach einem der vorhergehenden Ansprüche, wobei das Verfahren den folgenden weiteren Schritt umfasst:
- das Internetprotokoll- (IP-) Datenpaket von der Provider Edge- (PE-) Vorrichtung (10) zum ersten oder zweiten virtuellen Provider Edge- (vPE-) Gerät (41, 42) zu übertragen, abhängig von
- Routing-Daten, die in der Provider Edge- (PE-) Vorrichtung (10) gespeichert sind, und/oder
- einem Fehlerdetektionsschritt, der von der Provider Edge- (PE-) Vorrichtung (10) vor dem Übertragen des Internetprotokoll- (IP-) Datenpakets ausgeführt wird.

5. Verfahren nach einem der vorhergehenden Ansprüche, wobei die Provider Edge- (PE-) Vorrichtung (10) einen Satz Routing-Metrikwerte umfasst, so dass jeder Routing-Metrikwert des Satzes von Routing-Metrikwerten zu einer Netzroute (10', 10", 10"') von der Provider Edge- (PE-) Vorrichtung (10) zu einem spezifischen virtuellen Provider Edge- (vPE-) Gerät (41, 42, 43) in Beziehung steht, wobei das Verfahren den folgenden weiteren Schritt umfasst:
- das Internetprotokoll- (IP-) Datenpaket von der Provider Edge- (PE-) Vorrichtung (10) zum ersten virtuellen Provider Edge- (vPE-) Gerät (41) in dem Fall zu übertragen, dass das erste virtuelle Provider Edge- (vPE-) Gerät (41) zu einem niedrigsten Routing-Metrikwert des Satzes von Routing-Metrikwerten in Beziehung steht.

6. Verfahren nach einem der vorhergehenden Ansprüche, wobei das Verfahren den folgenden weiteren Schritt umfasst:
- dem ersten und dem zweiten virtuellen Provider Edge-(vPE-) Gerät (41, 42) durch das Diensteanbieter-(SP-) Netz (100) die gleiche Internetprotokoll- (IP-) Anycast-Adresse zuzuordnen, wobei die Internetprotokoll- (IP-) Anycast-Adresse vom ersten und zweiten virtuellen Provider Edge- (vPE-) Gerät (41, 42) für Internetprotokoll- (IP-) Kommunikation verwendet wird, die zum virtuellen privaten Netz (VPE) in Beziehung steht.

7. Verfahren nach einem der vorhergehenden Ansprüche, wobei das Verfahren die folgenden weiteren Schritte umfasst:
- den Fehlerdetektionsschritt vor Übertragen des Internetprotokoll- (IP-) Datenpakets auszuführen,
- im Fehlerdetektionsschritt einen Fehler zu detektieren, wobei der Fehler zu wenigstens einem von Folgenden in Beziehung steht:
- einer Verbindung zwischen der Provider Edge- (PE-) Vorrichtung (10) und einem virtuellen Provider Edge-(vPE-) Gerät (41, 42, 43), und
- einem Betriebszustand eines virtuellen Provider Edge-(vPE-) Geräts (41, 42, 43).

8. Verfahren nach einem der vorhergehenden Ansprüche, wobei das Verfahren den folgenden weiteren Schritt umfasst:
- das Internetprotokoll- (IP-) Datenpaket von der Provider Edge- (PE-) Vorrichtung (10) zum zweiten virtuellen Provider Edge- (vPE-) Gerät (42) in dem Fall zu leiten, dass der Fehler, der im Fehlerdetektionsschritt detektiert wird, zu wenigstens einem von Folgenden in Beziehung steht:
- einer Netzverbindung zwischen der Provider Edge-(PE-) Vorrichtung (10) und dem ersten virtuellen Provider Edge- (vPE-) Gerät (41) und
- einem Betriebszustand des ersten virtuellen Provider Edge- (vPE-) Geräts (41).

9. Verfahren nach einem der vorhergehenden Ansprüche, wobei zu Anfang der zweite Teil des virtuellen privaten Netzes (VPN) durch die Customer Edge- (CE-) Vorrichtung (11) über das erste virtuelle Provider Edge- (vPE-) Gerät (41) und das zweite virtuelle Provider Edge- (vPE-) Gerät (42) von fern erreichbar ist, wobei das Verfahren die weiteren folgenden Schritte umfasst:
- unter Verwendung von Internetprotokoll- (IP-) Anycast das Internetprotokoll- (IP-) Datenpaket von der Provider Edge- (PE-) Vorrichtung (10) zum ersten virtuellen Provider Edge- (vPE-) Gerät (41) zu übertragen,
- einen weiteren Fehlerdetektionsschritt anschließend an das Übertragen des Internetprotokoll- (IP-) Datenpakets auszuführen,
- durch die Provider Edge- (PE-) Vorrichtung (10) ein weiteres Internetprotokoll- (IP-) Datenpaket von der Customer Edge- (CE-) Vorrichtung (11) zu empfangen, wobei das weitere Internetprotokoll- (IP-) Datenpaket weitere virtuelle private Netz- (VPN-) Daten kapselt, die in Beziehung zum virtuellen privaten Netz (VPN) stehen,
- das weitere Internetprotokoll- (IP-) Datenpaket von der Provider Edge- (PE-) Vorrichtung (10) zum zweiten virtuellen Provider Edge- (vPE-) Gerät (42) in dem Fall zu leiten, dass ein weiterer Fehler, der im weiteren Fehlerdetektionsschritt detektiert wird, zu wenigstens einem von Folgenden in Beziehung steht:
- einer Netzverbindung zwischen der Provider Edge-(PE-) Vorrichtung (10) und dem ersten virtuellen Provider Edge- (vPE-) Gerät (41) und
- einem Betriebszustand des ersten virtuellen Provider Edge- (vPE-) Geräts (41).

10. Verfahren nach einem der vorhergehenden Ansprüche, wobei das Diensteanbieter- (SP-) Netz (100) eine weitere Provider Edge- (PE-) Vorrichtung (20) umfasst, wobei weitere Routing-Daten in der weiteren Provider Edge-(PE-) Vorrichtung (20) gespeichert sind, wobei das Verfahren den weiteren folgenden Schritt umfasst:
- durch das Diensteanbieter- (SP-) Netz (100) die Routing-Daten der Provider Edge- (PE-) Vorrichtung (10) und die weiteren Routing-Daten der weiteren Provider Edge- (PE-) Vorrichtung (20) so zu konfigurieren,
- dass die Routing-Daten angeben, dass ein erster Routing-Metrikwert, der zum ersten virtuellen Provider Edge- (vPE-) Gerät (41) in Beziehung steht, niedriger als ein zweiter Routing-Metrikwert ist, der zum zweiten virtuellen Provider Edge- (vPE-) Gerät (42) in Beziehung steht, und
- dass die weiteren Routing-Daten angeben, dass ein weiterer erster Routing-Metrikwert, der zum ersten virtuellen Provider Edge- (vPE-) Gerät (41) in Beziehung steht, niedriger als ein weiterer zweiter Routing-Metrikwert ist, der zum zweiten virtuellen Provider Edge- (vPE-) Gerät (42) in Beziehung steht.

11. Diensteanbieter- (SP-) Netz (100) zum Bereitstellen von virtueller privater Netz- (VPN-) Funktionalität für eine Customer Edge- (CE-) Vorrichtung (11), wobei das Diensteanbieter- (SP-) Netz (100) eine Provider Edge-(PE-) Vorrichtung (10), ein erstes virtuelles Provider Edge- (vPE-) Gerät (41) und ein zweites virtuelles Provider Edge- (vPE-) Gerät (42) umfasst, wobei die Customer Edge- (CE-) Vorrichtung (11) physisch mit der Provider Edge- (PE-) Vorrichtung (10) des Diensteanbieter- (SP-) Netzes (100) verbunden ist, wobei ein erster Teil eines virtuellen privaten Netzes (VPN) die Customer Edge- (CE-) Vorrichtung (11) umfasst, wobei ein zweiter Teil des virtuellen privaten Netzes (VPN) durch die Customer Edge- (CE-) Vorrichtung (11) über wenigstens eines vom ersten virtuellen Provider Edge-(vPE-) Gerät (41) und vom zweiten virtuellen Provider Edge- (vPE-) Gerät (42) von fern erreichbar ist, wobei die Provider Edge- (PE-) Vorrichtung (10) dazu konfiguriert ist, ein Internetprotokoll- (IP-) Datenpaket von der Customer Edge- (CE-) Vorrichtung (11) zu empfangen, wobei das Internetprotokoll- (IP-) Datenpaket virtuelle private Netz- (VPN-) Daten kapselt, die zum virtuellen privaten Netz (VPN) in Beziehung stehen, wobei die Provider Edge- (PE-) Vorrichtung (10) dazu konfiguriert ist, unter Verwendung von Internetprotokoll-(IP-) Anycast das Internetprotokoll- (IP-) Datenpaket zum ersten virtuellen Provider Edge- (vPE-) Gerät (41) oder zum zweiten virtuellen Provider Edge- (vPE-) Gerät (42) zu übertragen.

12. Diensteanbieter- (SP-) Netz (100) nach Anspruch 11, wobei das Diensteanbieter- (SP-) Netz (100) ein erstes Data Center (1) und ein zweites Data Center (2) umfasst, wobei sich das erste virtuelle Provider Edge- (vPE-) Gerät (41) im ersten Data Center (1) befindet, wobei sich das zweite virtuelle Provider Edge- (vPE-) Gerät (42) im zweiten Data Center (2) befindet.

13. Diensteanbieter- (SP-) Netz (100) nach einem der Ansprüche 11 oder 12, wobei die Provider Edge-Vorrichtung (10) dazu konfiguriert ist, das Internetprotokoll- (IP-) Datenpaket zum ersten oder zweiten virtuellen Provider Edge- (vPE-) Gerät (41, 42) abhängig von Folgendem zu übertragen:
- Routing-Daten, die in der Provider Edge- (PE-) Vorrichtung (10) gespeichert sind, und/oder
- einem Fehlerdetektionsschritt, der von der Provider Edge- (PE-) Vorrichtung (10) ausgeführt wird.

14. Computerprogramm, das Programmcodemittel umfasst, die, wenn sie auf einem Computer oder auf einer Provider Edge-(PE-) Vorrichtung (10) oder auf einem virtuellen Provider Edge- (vPE-) Gerät (41, 42) ausgeführt werden, bewirken, dass der Computer oder die Provider Edge- (PE-) Vorrichtung (10) oder das virtuelle Provider Edge- (vPE-) Gerät (41, 42) alle Schritte des Verfahrens nach einem der Ansprüche 1 bis 10 durchführt.

15. Speichervorrichtung, die dazu eingerichtet ist, das Computerprogramm nach Anspruch 14 zu speichern.

## Revendications

1. Procédé pour fournir une fonctionnalité de réseau privé virtuel (VPN) à un dispositif de bord client (CE) (11) en utilisant un réseau de fournisseur de services (SP) (100), dans lequel le réseau de fournisseur de services (SP) (100) comprend un dispositif de bord fournisseur (PE) (10), un premier appareil de bord fournisseur virtuel (vPE) (41) et un second appareil de bord fournisseur virtuel (vPE) (42), dans lequel le dispositif de bord client (CE) (11) est connecté physiquement au dispositif de bord fournisseur (PE) (10) du réseau de fournisseur de services (SP) (100), dans lequel une première partie d'un réseau privé virtuel (VPN) comprend le dispositif de bord client (CE) (11), dans lequel une seconde partie du réseau privé virtuel (VPN) est accessible à distance par le dispositif de bord client (CE) (11) par l'intermédiaire d'au moins l'un du premier appareil de bord fournisseur virtuel (vPE) (41) et du second appareil de bord fournisseur virtuel (vPE) (42), dans lequel le procédé comprend les étapes consistant à :
- recevoir, par le dispositif de bord fournisseur (PE) (10), un paquet de données de protocole Internet (IP) à partir du dispositif de bord client (CE) (11), dans lequel le paquet de données de protocole Internet (IP) encapsule des données de réseau privé virtuel (VPN) liées au réseau privé virtuel (VPN)
- transmettre, en utilisant le protocole Internet (IP) anycast, le paquet de données de protocole Internet (IP) à partir du dispositif de bord fournisseur (PE) (10) au premier appareil de bord fournisseur virtuel (vPE) (41) ou au second appareil de bord fournisseur virtuel (vPE) (42).

2. Procédé selon la revendication 1, dans lequel le procédé comprend les étapes supplémentaires consistant à :
- échanger des données de commande entre les premier et second appareils de bord fournisseur virtuel (vPE) (41, 42), les données de commande étant liées au réseau privé virtuel (VPN)
- synchroniser les premier et second appareils de bord fournisseur virtuel (vPE) (41, 42) en fonction des données de commande.

3. Procédé selon l'une quelconque des revendications précédentes, dans lequel le premier appareil de bord fournisseur virtuel (vPE) (41) comprend une première table de routage, dans lequel le second appareil de bord fournisseur virtuel (vPE) comprend une seconde table de routage, les première et seconde tables de routage étant liées au réseau privé virtuel (VPN), dans lequel le procédé comprend l'étape consistant à :
- mettre à jour la première et/ou la seconde table de routage en fonction des données de commande échangées entre les premier et second appareils de bord fournisseur virtuel (vPE) (41, 42).

4. Procédé selon l'une des revendications précédentes, dans lequel le procédé comprend l'étape supplémentaire consistant à :
- transmettre le paquet de données de protocole Internet (IP) à partir du dispositif de bord fournisseur (PE) (10) au premier ou au second appareil de bord fournisseur virtuel (vPE) (41, 42) en fonction de
- données de routage stockées dans le dispositif de bord fournisseur (PE) (10) et/ou
- une étape de détection de défaillance effectuée par le dispositif de bord fournisseur (PE) (10) avant la transmission du paquet de données de protocole Internet (IP).

5. Procédé selon l'une quelconque des revendications précédentes, dans lequel le dispositif de bord fournisseur (PE) (10) comprend un ensemble de valeurs de métrique de routage de sorte que chaque valeur de métrique de routage de l'ensemble de valeurs de métrique de routage est liée à une route de réseau (10', 10", 10"') allant du dispositif de bord fournisseur (PE) (10) à un appareil de bord fournisseur virtuel (vPE) spécifique (41, 42, 43), dans lequel le procédé comprend l'étape supplémentaire consistant à :
- transmettre le paquet de données de protocole Internet (IP) à partir du dispositif de bord fournisseur (PE) (10) au premier appareil de bord fournisseur virtuel (vPE) (41), dans le cas où le premier appareil de bord fournisseur virtuel (vPE) (41) est lié à une valeur de métrique de routage la plus basse de l'ensemble des valeurs de métrique de routage.

6. Procédé selon l'une des revendications précédentes, dans lequel le procédé comprend l'étape supplémentaire consistant à :
- attribuer au premier et au second appareil de bord fournisseur virtuel (vPE) (41, 42), par le réseau de fournisseur de services (SP) (100), la même adresse Internet (IP), dans lequel l'adresse anycast de protocole Internet (IP) est utilisée par le premier et le second appareil de bord fournisseur virtuel (vPE) (41, 42) pour la communication de protocole Internet (IP) liée au réseau privé virtuel (VPN).

7. Procédé selon l'une des revendications précédentes, dans lequel le procédé comprend les étapes supplémentaires consistant à :
- effectuer l'étape de détection de défaillance avant la transmission du paquet de données de protocole Internet (IP)
- détecter, dans l'étape de détection de défaillance, une défaillance, la défaillance étant liée à au moins l'un parmi :
- une connexion entre le dispositif de bord fournisseur (PE) (10) et l'appareil de bord fournisseur virtuel (vPE) (41, 42, 43), et
- un état de fonctionnement d'un appareil de bord fournisseur virtuel (vPE) (41, 42, 43).

8. Procédé selon l'une des revendications précédentes, dans lequel le procédé comprend l'étape supplémentaire consistant à :
- acheminer le paquet de données de protocole Internet (IP) à partir du dispositif de bord fournisseur (PE) (10) vers le second appareil de bord fournisseur virtuel (vPE) (42), dans le cas où la défaillance, détectée dans l'étape de détection de défaillance, est liée à au moins l'un parmi :
- une connexion réseau entre le dispositif de bord fournisseur (PE) (10) et le premier appareil de bord fournisseur virtuel (vPE) (41), et
- un état de fonctionnement du premier appareil de bord fournisseur virtuel (vPE) (41).

9. Procédé selon l'une quelconque des revendications précédentes, dans lequel, au départ, la seconde partie du réseau privé virtuel (VPN) est accessible à distance par le dispositif de bord client (CE) (11) par l'intermédiaire du premier appareil de bord fournisseur virtuel (vPE) (41) et du second appareil de bord fournisseur virtuel (vPE) (42), dans lequel le procédé comprend les étapes supplémentaires consistant à :
- transmettre, en utilisant le protocole Internet (IP) anycast, le paquet de données de protocole Internet (IP) à partir du dispositif de bord fournisseur (PE) (10) au premier appareil de bord fournisseur virtuel (vPE) (41),
- effectuer une autre étape de détection de défaillance après la transmission du paquet de données de protocole Internet (IP),
- recevoir, par le dispositif de bord fournisseur (PE) (10), un autre paquet de données de protocole Internet (IP) à partir du dispositif de bord client (CE) (11), dans lequel l'autre paquet de données de protocole Internet (IP) encapsule d'autres données de réseau privé virtuel (VPN) liées au réseau privé virtuel (VPN),
- acheminer l'autre paquet de données de protocole Internet (IP) à partir du dispositif de bord fournisseur (PE) (10) vers le second appareil de bord fournisseur virtuel (vPE) (42), dans le cas où une autre défaillance, détectée dans l'autre étape de détection de défaillance, est liée à au moins l'un parmi :
- une connexion réseau entre le dispositif de bord fournisseur (PE) (10) et le premier appareil de bord fournisseur virtuel (vPE) (41), et
- un état de fonctionnement du premier appareil de bord fournisseur virtuel (vPE) (41).

10. Procédé selon l'une quelconque des revendications précédentes, dans lequel le réseau de fournisseur de services (SP) (100) comprend un autre dispositif de bord fournisseur (PE) (20), dans lequel d'autres données de routage sont stockées dans l'autre dispositif de bord fournisseur (PE) (20), dans lequel le procédé comprend l'étape supplémentaire consistant à :
- configurer, par le réseau de fournisseur de services (SP) (100), les données de routage du dispositif de bord fournisseur (PE) (10) et les autres données de routage de l'autre dispositif de bord fournisseur (PE), de sorte que
- les données de routage indiquent qu'une première valeur de métrique de routage liée au premier appareil de bord fournisseur virtuel (vPE) (41) est inférieure à une seconde valeur de métrique de routage liée au second appareil de bord fournisseur virtuel (vPE) (42), et
- les autres données de routage indiquent qu'une autre première valeur de métrique de routage liée au premier appareil de bord fournisseur virtuel (vPE) (41) est inférieure à une autre seconde valeur de métrique de routage liée au second appareil de bord de fournisseur virtuel (vPE) (42).

11. Réseau de fournisseur de services (SP) (100) pour fournir une fonctionnalité de réseau privé virtuel (VPN) à un dispositif de bord client (CE) (11), dans lequel le réseau de fournisseur de services (SP) (100) comprend un dispositif de bord fournisseur (PE) (10), un premier appareil de bord fournisseur virtuel (vPE) (41) et un second appareil de bord fournisseur virtuel (vPE) (42), dans lequel le dispositif de bord client (CE) (11) est physiquement connecté au dispositif de bord fournisseur (PE) (10) du réseau de fournisseur de services (SP) (100), dans lequel une première partie d'un réseau privé virtuel (VPN) comprend le dispositif de bord client (CE) (11), dans lequel une seconde partie du réseau privé virtuel (VPN) est accessible à distance par le dispositif de bord client (CE) (11) par l'intermédiaire d'au moins l'un du premier appareil de bord fournisseur virtuel (vPE) (41) et du second appareil de bord fournisseur virtuel (vPE) (42), dans lequel le dispositif de bord fournisseur (PE) (10) est configuré pour recevoir un paquet de données de protocole Internet (IP) à partir du dispositif de bord client (CE) (11), dans lequel le paquet de données de protocole Internet (IP) encapsule des données de réseau privé virtuel (VPN) liées au réseau privé virtuel (VPN), dans lequel le dispositif de bord fournisseur (PE) (10) est configuré pour transmettre, en utilisant le protocole Internet (IP) anycast, le paquet de données de protocole Internet (IP) au premier appareil de bord fournisseur virtuel (vPE) (41) ou au second appareil de bord fournisseur virtuel (vPE) (42).

12. Réseau de fournisseur de services (SP) (100) selon la revendication 11, dans lequel le réseau de fournisseur de services (SP) (100) comprend un premier centre de données (1) et un second centre de données (2), dans lequel le premier appareil de bord fournisseur virtuel (vPE) (41) est situé dans le premier centre de données (1), dans lequel le second dispositif de bord fournisseur virtuel (VPE) (42) est situé dans le second centre de données (2).

13. Réseau de fournisseur de services (SP) (100) selon l'une des revendications 11 ou 12, dans lequel le dispositif de bord fournisseur (10) est configuré pour transmettre le paquet de données de protocole Internet (IP) au premier ou au second appareil de bord fournisseur virtuel (vPE) (41, 42) en fonction de
- données de routage stockées dans le dispositif de bord fournisseur (PE) (10) et/ou
- une étape de détection de défaillance effectuée par le dispositif de bord fournisseur (PE) (10).

14. Programme informatique comprenant un moyen de code de programme qui, lorsqu'il est exécuté sur un ordinateur ou sur un dispositif de bord fournisseur (PE) (10) ou sur un appareil de bord fournisseur virtuel (vPE) (41, 42), amène l'ordinateur ou le dispositif de bord fournisseur (PE) (10) ou l'appareil de bord fournisseur virtuel (vPE) (41, 42) à effectuer toutes les étapes du procédé selon l'une quelconque des revendications 1 à 10.

15. Dispositif de stockage conçu pour stocker le programme informatique selon la revendication 14.
